# EUROPEAN PATENT APPLICATION

(11) **EP 1 349 058 A1**
(43) Date of publication of application: **01.10.2003**
(21) Application number: 01273569.2
(22) Date of filing: 12.12.2001
(51) Int. Cl.: G06F 3/06, G06F 12/14, G11B 20/10

(54) **METHOD OF RECORDING DATA, RECORDING MEDIUM AND RECORDING DEVICE**

(30) Priority: 27.12.2000 JP 2000396585
(71) Applicant: TDK Corporation, Chuo-ku, Tokyo 103-8272 (JP)
(72) Inventor: KOBAYASHI, Nobuyuki, Chuo-ku, Tokyo 103-8272 (JP); FUJII, Ken, Chuo-ku, Tokyo 103-8272 (JP); TAKASUGI, Yasufumi, Chuo-ku, Tokyo 103-8272 (JP); NAMIOKA, Takashi, Chuo-ku, Tokyo 103-8272 (JP)
(74) Representative: VOSSIUS & PARTNER
(86) International application number: JP0110921
(87) International publication number: WO02061567

(57) **Abstract**

A record data recording method according to the invention is a method of recording record data (Dd) on a recording medium (OD) such as a removable optical disk. In recording the record data (Dd) on the recording medium (OD), device specification data [serial number data (Ds) concerning an associated recording/reproducing device (1) or authentication program data (Dps) including the serial number data (Ds)] for specifying a recording/reproducing device (1) permitted to read the record data (Dd) is recorded, and at the same time a determination program is recorded which is read out by a recording/reproducing device (1) before the record data (Dd) recorded on the recording medium (OD) is read, so as to determine identity between the recording/reproducing device (1) which read out the determination program and the recording/reproducing device (1) specified based on the device specification data.

## Description

### Technical Field

This invention relates to a record data recording method for recording record data on a removable recording medium (removable medium), recording medium having the record data recorded thereon, and a recording device.

### Background Art

In general, as a record data protecting method for preventing unauthorized rewriting and reading of record data recorded on a recording medium, there have been conventionally known a method of holding the recording medium in a write protect state, a method of setting the attribute of the recording medium to a read-only attribute or an invisible attribute, and a method of encrypting the recording medium. However, even if these methods are employed, the record data could be rewritten or read out relatively easily e.g. by using a personal computer. To solve this problem, a method has been proposed in which an ID for authentication is recorded on a recording medium together with record data, and when the recording medium is accessed or when the record data is read out, the recorded authentication ID is automatically checked by a predetermined authentication process to thereby prevent unauthorized reading/writing of the record data.

For instance, a recording/reproducing device disclosed in Japanese Laid-Open Patent Publication (Kokai) No. 10-49986 is configured to be capable of writing and reading record data on and from a partial ROM disk (hereinafter also referred to as a "disk") including a read-only ROM area having various data recorded therein in advance, and a rewritable area in which record data can be written. This kind of recording/reproducing device is equipped with a function of limiting the reading and writing of record data by a read/write flag comprised of a medium permission flag that when it is determined that a disk inserted into the device is of a disk type readable/writable by the device, permits access to the disk, and a band permission flag that permits reading/writing of record data (band) when a predetermined condition is satisfied. Further, recording/reproducing devices of this type each have a built-in memory storing a device ID specifically assigned to the device and different from the other's. On the other hand, in the ROM area of each disk of the kind disclosed in the above-mentioned publication, there are recorded in advance disk type information indicating that the disk is of a type provided with a function of protecting record data (hereinafter also referred to a "protect-function disk") and a recording medium ID specifically assigned to the recording medium on a recording medium-by-recording medium basis. In this case, the recording medium ID is defined such that predetermined relationship is established between a device ID assigned to a recording/reproducing device permitted to read and write the record data (e.g. a recording/reproducing device owned by a person managing the record data) and the recording medium ID itself.

When this recording/reproducing device is used for reproducing or rewriting of record data recorded on a protect-function disk, first, the recording/reproducing device reads out disk type information when the disk is inserted into the device. In this case, if the recording/reproducing device is not compatible with the protect-function disk, judgment of disk type error is made when the disk type information read out is checked, and reading from and writing on the disk are disabled. Thus, unauthorized reading/writing of the record data by this kind of recording/reproducing device is prevented. On the other hand, a recording/reproducing device which was able to determine, based on the disk type information read out, that the disk is a protect-function disk, reads out a recording medium ID from the disk, and then compares the recording medium ID with a device ID assigned to the recording/reproducing device, to thereby determine whether or not the predetermined relationship is established between the two ID's. In this case, when the recording/reproducing device is one which is permitted to read and write the record data, the predetermined relationship is established between the device ID assigned to the recording/reproducing device and the recording medium ID read out from the disk. Therefore, only when determining that the relationship is established, the recording/reproducing device controls the medium permission flag to an ON state. As a result, access to the disk by the recording/reproducing device is allowed, which makes it possible to write new record data on the disk, and read the record data from the disk under conditions described hereinafter. On the other hand, e.g. in a recording/reproducing device owned by a third person (i.e. a recording/reproducing device which is not permitted to read or write the record data), the medium permission flag is held in an OFF state so that access to the disk is not permitted, whereby unauthorized reading/writing of the record data is prevented.

In the recording/reproducing device whose access to the disk is allowed, whenever a user of the device tries to read out record data from the disk, the user is requested to enter an ID assigned to the record data. If the entered ID is identical to the ID assigned to the record data (in this case, the ID assigned to the record data is assumed to be known beforehand to the authorized user alone), the recording/reproducing device controls the band permission flag to an ON state, whereby reading of the record data is enabled. On the other hand, if the entered ID is not identical to the ID assigned to the record data, the recording/reproducing device holds the band permission flag in an OFF state. In this state, reading of the record data is disabled, whereby unauthorized reproduction or rewriting of the record data is prevented.

### Disclosure of the Invention

From the study of the above prior art, the inventor found out the following problems: In the conventional recording/reproducing device, the complicated authentication process including determination of a disk type, determination of the relationship between a recording medium ID and a device ID, and confirmation of an ID of each record data (band) is executed so as to prevent unauthorized reading/writing of record data. This requires even an authorized user, who wants to read from or write on a disk, to control each flag to an ON state through complicated processing, and this authenticating process is troublesome. Further, according to the conventional recording/reproducing device, a recording medium ID in the predetermined relationship with a device ID is required to be recorded on a disk at the time of manufacturing the disk, which causes a considerable increase in the manufacturing costs of the disk. To overcome this problem, an information processing device is disclosed in Japanese Laid-Open Publication (Kokai) No. 7-21697, in which at the time of recording record data, medium identification data is recorded in a recording area where rewriting and copying of data is difficult to effect, and at the same time a program including description of a process for determining identity of the medium identification data is recorded as record data, whereby the program is prevented from being started from an unauthorized duplicate of the recording medium. Although this record data protecting method enables reduction of the manufacturing costs of the recoding medium, it suffers from the problem of difficulty in effectively protecting various kinds of record data, such as text data, audio data, and image data, since the record data itself is assumed to be program data.

The present invention has been made to solve the above problems, and it is a main object of the invention to provide a record data recording method, a recording medium, and a recording device, which are capable of preventing unauthorized reading/writing of record data without any need to execute a complicated authentication process, with reduced manufacturing costs of the recording medium.

A recording method according to the present invention is a record data recording method for recording record data on a removable recording medium, wherein in recording the record data on the recording medium, device specification data for specifying a reproducing device permitted to read the record data is recorded, and a determination program is recorded which is read out by a reproducing device before the record data recorded on the recording medium is read out so as to determine identity between the reproducing device which read out the determination program and the reproducing device specified based on the device specification data.

According to this recording method, a step of recording an ID for authentication or the like on the recording medium in advance can be dispensed with.
This makes it possible to reduce the manufacturing costs of the recording medium. Further, for a reproducing device which is not capable of reading the determination program, it is possible to cause a predetermined error to occur, while for a reproducing device which is capable of reading out the determination program but incapable of interpreting contents described in the determination program, it is possible to cause a reproducing process to be terminated when the reading of the determination program is completed. This makes it possible to positively protect the record data against reproducing devices of these kinds. Furthermore, access to the recording medium or reading of the record data by a reproducing device which is capable of interpreting the contents described in the determination program and is other than the reproducing device specified by the device specification data recorded on the recording medium can be positively inhibited based on determination of identity of the device according to the determination program. Although the record data recording method is simple, it is thus capable of positively prevent unauthorized reading and writing of the record data.

It is preferred that an ID assigned to the reproducing device permitted to read the record data, for identification thereof is recorded as the device specification data. If the recording process is thus executed, simply by determining whether or not a reproducing device about to read the record data has an ID for identification assigned thereto which is recorded on the recording medium as the device specification data, it is possible to determine whether or not the reproducing device is permitted to read the record data, and hence the authentication process can be positively and easily executed when the record data is reproduced.

Further, it is preferred that the device specification data is recorded as part of the determination program. If the recording process is thus executed, analysis of the device specification data is made more difficult than in a recording method in which device specification data and a determination program are separately recorded as independent files, and hence it is possible to more positively prevent unauthorized reading/writing of the record data.

A recording medium according to the invention comprises the record data, the device specification data for specifying the reproducing device permitted to read the record data, and the determination program, which are recorded thereon by the record data recording method described above.

According to this recording medium, since the record data, the device specification data, and the determination program are recorded at the time of recording the record data, it is possible to prevent unauthorized reading/writing of the record data while making the manufacturing costs of the recording medium lower than those of a recording medium on which device specification data is recorded at the time of manufacturing thereof in advance.

A recording device according to the invention is capable of recording record data on a removable recording medium, and comprises a specification data storing section for storing device specification data for specifying a reproducing device permitted to read the record data, a program storing section for storing a determination program which is read out by a reproducing device before the record data recorded on the recording medium is read out so as to determine identity between the reproducing device which read out the determination program and the reproducing device specified based on the recorded device specification data, and a recording control section for causing the device specification data and the determination program to be recorded on the recording medium at a time of recording the record data on the recording medium.

According to this recording device, which comprises a specification data storing section for storing the device specification data, a program storing section for storing the determination program, and a recording control section for causing record data, device specification data, and determination program to be recorded on the recording medium, if record data is recorded by using this recording device, it is possible to cause a predetermined error to occur for a reproducing device which is not capable of reading the determination program, while for a reproducing device which is capable of reading out the determination program but incapable of interpreting contents described in the determination program, it is possible to cause a reproducing process to be terminated when the reading of the determination program is completed. This makes it possible to positively protect the record data against reproducing devices of these kinds. Furthermore, access to the recording medium or reading of the record data by a reproducing device which is capable of interpreting the contents described in the determination program and is other than the reproducing device specified by the device specification data recorded on the recording medium can be positively inhibited based on determination of identity of the device according to the determination program. Further, by recording record data by using the recording device, a step of recording an ID for authentication or the like on the recording medium in advance can be dispensed with. This makes it possible to reduce the manufacturing costs of the recording medium.

Further, it is preferred that the specification data storing section stores an ID assigned to the reproducing device permitted to read the record data for identification, as the device specification data. According to this construction, access to the recording medium or reading of the record data by a reproducing device which is not assigned an ID for identification identical to the ID recorded on the recording medium for identification can be positively inhibited based on determination of identity according to the determination program.

Moreover, it is preferred that the specification data storing section stores, as the ID for identification, any one of a device management number specifically assigned to the reproducing device permitted to read the record data at a time of manufacturing the reproducing device, an interface management number specifically assigned to a data input/output interface section of the reproducing device, and a program management number specifically assigned to a control program for controlling operation of the data input/output interface section. According to this construction, dedicated storage means for storing the ID for identification can be dispensed with, which makes it possible to make the manufacturing costs of the recording device lower than when a dedicated ID for identification is additionally provided as device specification data. Further, since no identical numbers exist in the above management numbers, the use of one of the management numbers as an ID for identification makes it possible to prevent unauthorized reading/writing of the record data.

It is preferred that the recording device according to the invention comprises a specification data input section for inputting the device specification data from outside the device, and the specification data storing section stores the device specification data input via the specification data input section. According to this construction, record data can be recorded such that even as for reproducing devices other than a recording device that records record data on a recording medium, specific ones thereof alone are permitted to reproduce the record data.

Further, it is preferred that the recording device of the invention comprises a data reading section for reading out the record data, the determination program, and the device specification data, all of which are recorded on the recording medium, a determination section for determining identity between the reproducing device specified based on the device specification data and the recording device, according to the determination program, and a control section for executing a predetermined process prescribed for each of possible results of determination by the determination section. According to this construction, by recording the device specification data concerning the recording device and the determination program on a recording medium at the time of recording record data, it is possible to read out the record data via the data reading section of the recording device and output the same to an external device such as a personal computer.

It is also preferred that the recording device of the invention is capable of executing reproduction based on the record data read out from the recording medium via the data reading section. According to this construction, by recording the device specification data concerning the recording device and the determination program on a recording medium, it is possible to read out and reproduce the record data by the recording device.

It should be noted that the present disclosure relates to the subject matter included in Japanese Patent Application No. 2000-396585 filed on December 27, 2000, and it is apparent that all the disclosures therein are incorporated herein by reference.

### Brief Description of Drawings

FIG. 1 is a block diagram showing the arrangement of a recording/reproducing device 1 according to an embodiment of the invention;

FIG. 2 is a view useful in explaining a data recording area 11 of an optical disk OD;

FIG. 3 is a flowchart of a recording process carried out on the optical disk OD by the recording/reproducing device 1;

FIG. 4 is a flowchart of a reproducing process 1, which is executed in reproduction from the optical disk OD by a general CD player;

FIG. 5 is a flowchart of a reproducing process 2, which is executed in reproduction from the optical disk OD by the recording/reproducing device 1; and

FIG. 6 is a flowchart of a reproducing process 3, which is executed in reproduction from the optical disk OD by a CD-R drive other than the recording/reproducing device 1.

### Best Mode for Carrying Out the Invention

A record data recording method, a recording medium, and a recording device according to a preferred embodiment of the present invention will be described hereafter with reference to the accompanying drawings.

First, the arrangement of a recording/reproducing device 1 will be described with reference to the drawings.

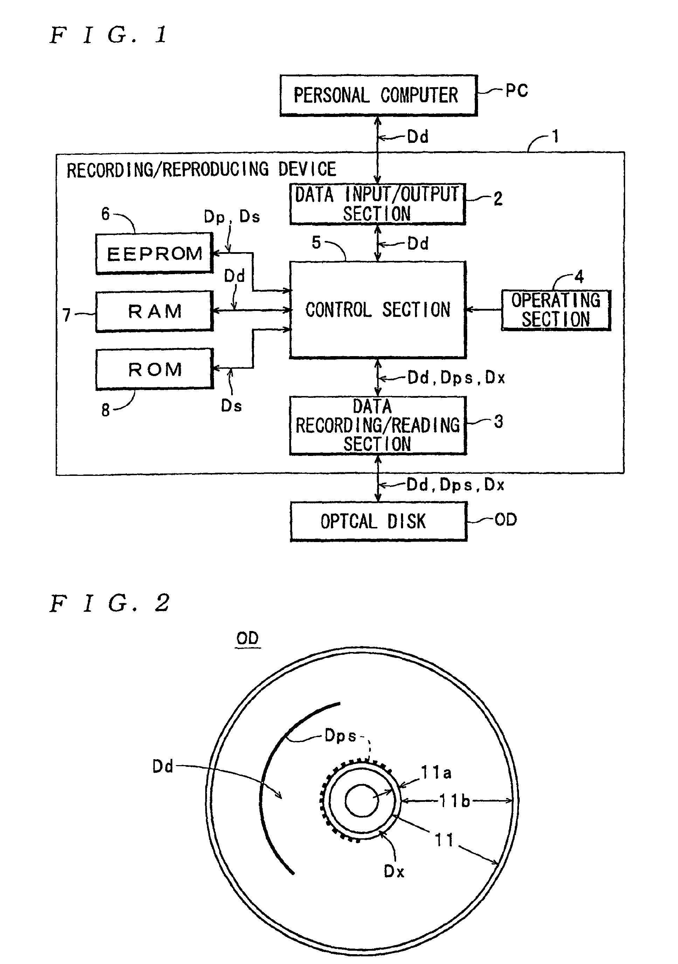

The recording/reproducing device 1 shown in FIG. 1 is a USB (Universal Serial Bus) connection-type external CD-R drive connectable to a personal computer PC or the like. The device 1 is capable of recording and reading various kinds of digital data on and from an optical disk OD. It should be noted here that various USB connection-type devices, including recording/reproducing devices 1, have respective USB serial numbers different from each other and specifically assigned thereto. On the other hand, the optical disk OD corresponds to a recording medium in the invention, and a general-purpose CD-R (unrewritable writable disk) available on the market is used as the optical disk OD by way of example. Incidentally, in the CD family including the CD-R, there are unwritable disks, such as a CD-DA for music and a CD-ROM having various data recorded thereon, and rewritable writable disks such as a CD-RW. Further, as shown in FIG. 2, the optical disk OD on which various digital data are recorded has a data recording area 11 which is comprised of a management data recording area 11a defined at a radially innermost portion of the disk and a record data recording area 11b defined radially outward of the management data recording area 11a. In the management data recording area 11a there are recorded FAT data concerning record data Dd, Dd, ... recorded in the record data recording area 11b, management data Dx (e.g. "TOC (Table Of Contents)" or "UTOC (User Table Of Contents)") including position data concerning the recording position of data to be read out first when the optical disk OD is inserted into one of various recording devices including the recording/reproducing device 1, and so forth. Further, in the record data recording area 11b there are recorded the record data Dd, Dd, ... (data prepared or updated by a user using one of various application software programs, including audio data, video or image data, music data, or text data, or data prepared by one of the various application software programs and obtained by the user), authentication program data Dps, described hereinafter, and so forth.

As shown in FIG. 1, the recording/reproducing device 1 is comprised of a data input/output section 2, a data recording/reading section 3, an operating section 4, a control section 5, an EEPROM 6, a RAM 7, and a ROM 8. The data input/output section 2 has a USB connection-type connector and inputs record data Dd from a personal computer PC connected to the recording/reproducing device 1 via the connector and outputs record data Dd to the personal computer PC under the control of the control section 5. The data recording/reading section 3 irradiates the optical disk OD with laser to thereby write and read record data Dd, authentication program data Dps, management data Dx, and so forth on and from the optical disk OD. The operating section 4 corresponds to an specification data input section of the invention, and has arranged therein a button via which a USB serial number assigned to a USB connection-type device other than the recording/reproducing device 1 can be input, a button for setting recording conditions, and so forth.

The control section 5 corresponds to a recording control section, a control section, and a determination section of the invention, and controls the recording and reading of record data Dd via the data recording/reading section 3. Further, at the time of reproducing record data Dd, the control section 5 executes a predetermined authentication process according to an authentication program. The EEPROM 6 corresponds to a program storing section of the invention, and stores authentication program data Dp prepared by using an external device. In this case, the authentication program data Dp is recorded in a file format readable not only by the recording/reproducing device 1 but also by various personal computers PC, such that it can be automatically started by the various personal computers PC immediately after completion of reading thereof. More specifically, the authentication program data Dp is formed by an executable file, such as an AUTORUN.EXE file, or a batch file of one of various types. The EEPROM 6 also functions as a specification data storing section of the invention, for storing a USB serial number (serial number data Ds) of a reproducing device other than the recording/reproducing device 1, which is input via the operating section 4. The RAM 7 temporarily stores the results of arithmetic operations by the control section 5, record data Dd to be recorded on the optical disk OD, and record data Dd read from the optical disk OD. The ROM 8 corresponds to the specification data storing section of the invention and the aforementioned built-in memory, and stores the USB serial number (serial number data Ds) assigned in advance to the recording/reproducing device 1, and an operating program of the control section 5.

Next, the recording method of recording record data Dd (e.g. audio data) on an unused optical disk OD in single session mode and a method of reproducing the record data Dd recorded on the optical disk OD by the recording method will be described with reference to the drawings.

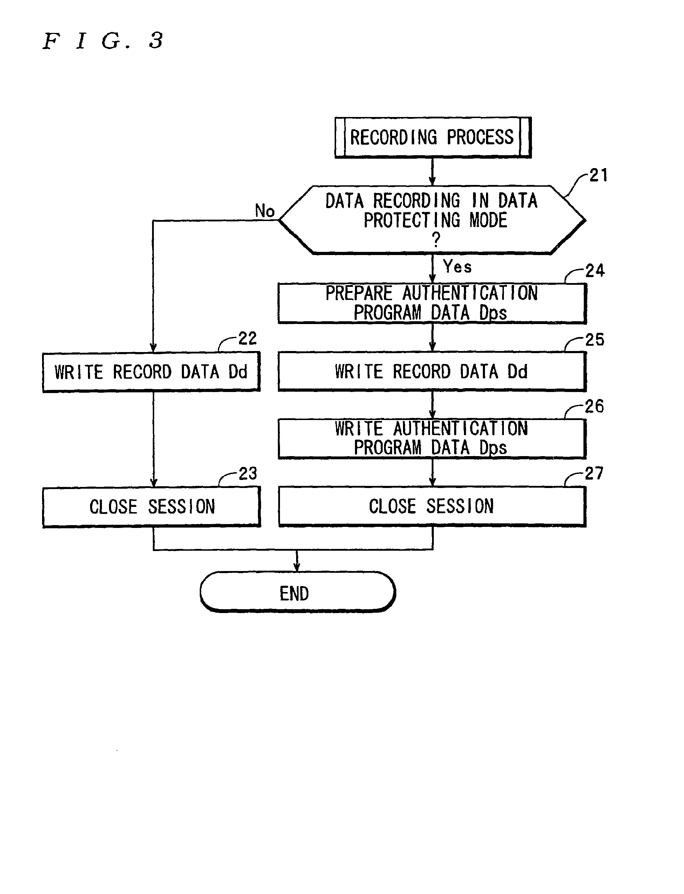

First, a recording process carried out by the recording/reproducing device 1 is explained with reference to FIG. 3. In the recording/reproducing device 1, when the optical disk OD is inserted into a disk-inserting section, not shown, the data recording/reading section 3 accesses the management data recording area 11a of the optical disk OD under the control of the control section 5. In this case, the unused optical disk OD stores in the management data recording area 11a thereof only various information items (which are not directly used by a user but used by various recording devices or reproducing devices), including disk type information indicating that the recording medium is a CD-R. Therefore, the control section 5 determines that the optical disk OD is an unused CD-R. Then, the control section 5 causes the personal computer PC to display on a monitor thereof a selection screen for selection of a method of recording data on the optical disk OD, thereby prompting the user to select between a data protecting mode and a normal recording mode (step 21). When the normal recording mode is selected by the user in this step, record data Dd output from the personal computer PC are sequentially recorded in the record data recording area 11b of the optical disk OD via the data recording/reading section 3 (step 22). Then, when recording of all the record data Dd, Dd, ... is completed, the session of the optical disk OD is closed (step 23). Thus, a CD-R reproducible by a CD-ROM drive, a CD-R drive, a CD-RW drive, and the like is produced.

On the other hand, when the data protecting mode is selected in the step 21, the control section 5 reads the authentication program data Dp from the EEPROM 6 and the serial number data Ds from the ROM 8, and then generates authentication program data Dps based on both the data, followed by storing the authentication program data Dps in the RAM 7 (step 24). In this case, the authentication program data Dps is formed by coupling the serial number data Ds as a portion thereof to either the head or the tail of the authentication program data Dp. Thereafter, the record data Dd input from the personal computer PC via the data input/output section 2 are sequentially recorded in the record data recording area 11b of the optical disk OD via the data recording/reading section 3 (step 25).

Then, the control section 5 reads out the authentication program data Dps from the RAM 7, and records the same at the rear of the record data Dd in the record data recording area 11b (i.e. a radially outermost portion of a session including the record data Dd) (step 26). Subsequently, FAT data concerning the recorded record data Dd and authentication program data Dps is recorded in the management data recording area 11a as a portion of management data Dx. Further, the control section 5 causes position data concerning the recording position of the authentication program data Dps to be recorded as a portion of the management data Dx in the management data recording area 11a as data to be read out first when the optical disk OD is inserted into any reproducing device. Thereafter, when the recording of the management data Dx is completed, the control section 5 closes the session of the optical disk OD (step 27). Through the above recording process, a CD-R of a data protecting type which allows the record data Dd to be reproduced only by the recording/reproducing device 1 that recorded the record data Dd on the optical disk OD is produced.

It should be noted that the CD-R of the data protecting type can be recorded in a manner reproducible by a CD-ROM drive, a CD-R drive, a CD-RW drive, and the like (each of which is hereinafter generically also referred to as a "drive") other than the recording/reproducing device 1. For such recording, first, the operating section 4 is operated before execution of the recording process whereby a USB serial number assigned to a target drive is input. Then, the control section 5 generates serial number data Ds based on the input USB serial number and stores the same in the EEPROM 6. In this case, for instance, the recording/reproducing device 1 is configured to be capable of storing ten serial number data Ds, Ds, ... associated with respective ten drives. In the process of recording record data Dd, the control section 5 generates authentication program data Dps based on one or more serial number data Ds and authentication program data Dp read out from the EEPROM 6 and stores the same in the RAM 7... At this time, the control section 5 may combine the one or more serial number data Ds read out from the EEPROM 6 and the serial number data Ds read out from the ROM 8 (i.e. the serial number data Ds associated with the recording/reproducing device 1) together to thereby generate the authentication program data Dps. Then, after recording of the record data Dd is completed, the control section 5 records the authentication program data Dps read out from the RAM 7. Thereafter, the session is closed, whereby a CD-R reproducible by a drive of which a USB serial number is stored in advance is produced. Thus, other drives owned by the user who owns the recording/reproducing device 1 as well as a third person's drive whose USB serial number is known in advance are permitted to read the audio data from the CD-R.

Next, reproducing processes 1 to 3 for reproducing record data Dd recorded on a CD-R in the data protecting mode by the recording/reproducing device 1 will be described with reference to the drawings.

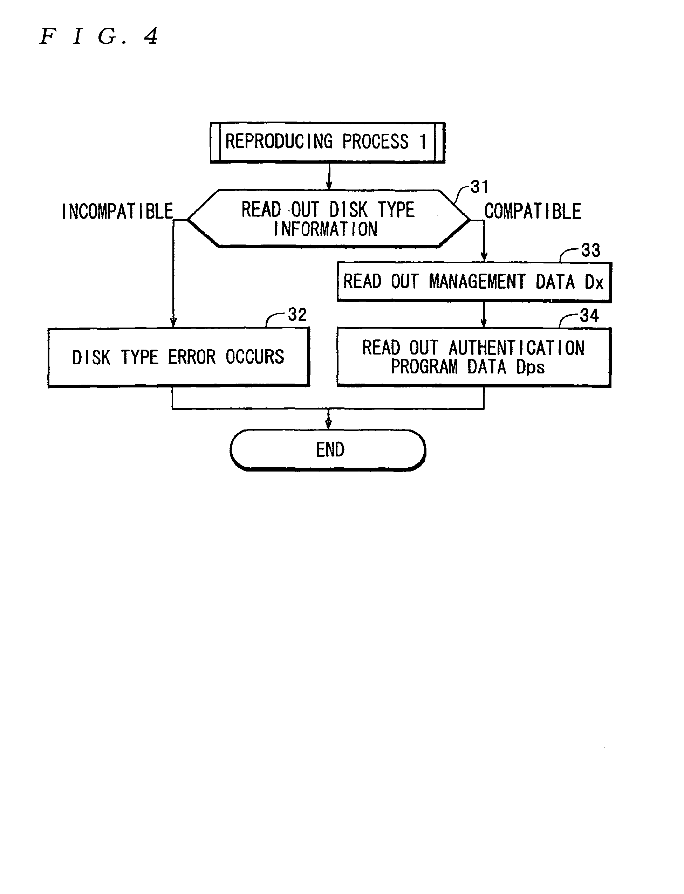

For instance, when a reproduction-only device as a separate unit, such as a general CD player designed specifically for reproduction of music exclusively from CD-DA's, or a CD player compatible with various types of disks including CD-DA's, is used to reproduce record data Dd from an optical disk OD, the reproducing process 1 shown in FIG. 4 is executed by the CD player. In the reproducing process 1, when an optical disk OD is inserted, first, disk type information is read out from the management data recording area 11a of the optical disk OD (step 31). If the CD player is not compatible with any other disk type than the CD-DA, it is judged that disk type error occurred (step 32), and the reproducing process 1 is terminated by error. On the other hand, if the CD player is compatible not only with a CD-DA but also with disks of various disk types, management data Dx is read out (step 33). In this case, in the management data Dx, the recording position of authentication program data Dps is indicated as the recording position of data to be read out first. Therefore, the CD player starts data reading from the recording position of the authentication program data Dps in the record data recording area 11b (i.e. radially outermost portion of the session) (step 34). However, the CD player of this kind is not capable of interpreting the contents of the authentication program data Dps. Therefore, the CD player terminates the reproducing process 1 when reading of the authentication program data Dps is completed. As a result, reproduction of sound (record data Dd) by the reproducing device (CD player in the present example) other than the recording/reproducing device 1 which recorded the record data Dd is prevented.

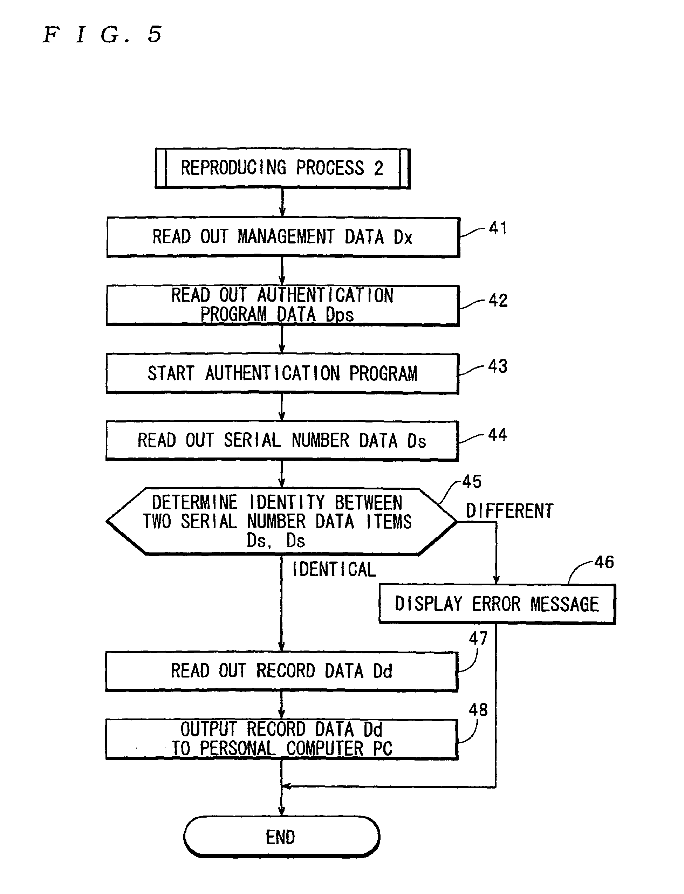

On the other hand, when the recording/ reproducing device 1 which recorded the record data Dd (or a recording/reproducing device 1 of the same type as the recording/reproducing device 1 used for the recording) is used to reproduce the record data Dd, the reproducing process 2 shown in FIG. 5 is executed by the recording/reproducing device 1. In the reproducing process 2, when the optical disk OD is inserted, first, the control section 5 reads out the management data Dx from the management data recording area 11a via the data recording/reading section 3 (step 41). In this case, in the management data Dx, the recording position of the authentication program data Dps is indicated as that of data to be read out first. Therefore, the control section 5 follows the indication to read out the authentication program data Dps recorded in the record data recording area 11b (step 42). In this case, since the authentication program data Dps is stored in a file format in which a program is automatically started immediately after completion of reading of the file, the control section 5 automatically executes the contents of the authentication program data Dps (i.e. the control section 5 starts the authentication program)(step 43). In doing this, first, the control section 5 extracts authentication program data Dp from the authentication program data Dps according to an instruction described in the head portion of the authentication program data Dps.

Then, after determining, based on description of the extracted authentication program data Dp, whether or not there is a serial number data Ds recorded in the ROM 8 of the recording/reproducing device 1, the control section 5 reads out the serial number data Ds from the ROM 8 (step 44). Subsequently, the control section 5 determines whether or not the serial number data Ds read out from the ROM 8 is identical to a serial number data Ds recorded in the authentication program data Dps (step 45). In doing this, in a recording/reproducing device different from the recording/reproducing device 1 which recorded the record data Dd on the optical disk. OD, it is determined that the two serial number data Ds, Ds are different from each other. Therefore, when it is determined that the two serial number data Ds, Ds are different from each other, the control section 5 executes a predetermined process of causing the personal computer PC to display on a monitor thereof an error message saying, "Information items for identification do not coincide with each other. Please use the drive used for recording the data on this CD-R, for reproduction of the data." (step 46), followed by terminating the reproducing process 2 by error. Thus, unauthorized reproduction of sound (record data Dd) is prevented.

On the other hand, if it is determined in the step 45 that the two serial number data Ds, Ds are identical to each other, i.e. if the recording/reproducing device 1 is identified as a reproducing device permitted to reproduce the record data recorded on the optical disk OD, a predetermined process of permitting reading/deleting of the record data recorded on the optical disk OD and additional writing of record data Dd (addition of a session) is executed. Therefore, the control section 5 reads out record data Dd, Dd, . . . via the data recording/reading section 3 (step 47), and outputs the record data Dd, Dd to the personal computer PC via the data input/output section 2 (step 48). Thereafter, the personal computer PC reproduces sound based on the record data Dd, Dd,... output from the recording/reproducing device 1. As a result, the owner of the recording/reproducing device 1 which recorded the record data Dd, Dd, ... on the optical disk OD, i.e. the authentic owner of the optical disk OD can readily reproduce the recorded sound without any need to carry out complicated operations including ID entry. In this case, the personal computer PC capable of reproducing sound based on the record data Dd, Dd, ... and the recording/reproducing device 1 forms the recording device of the invention.

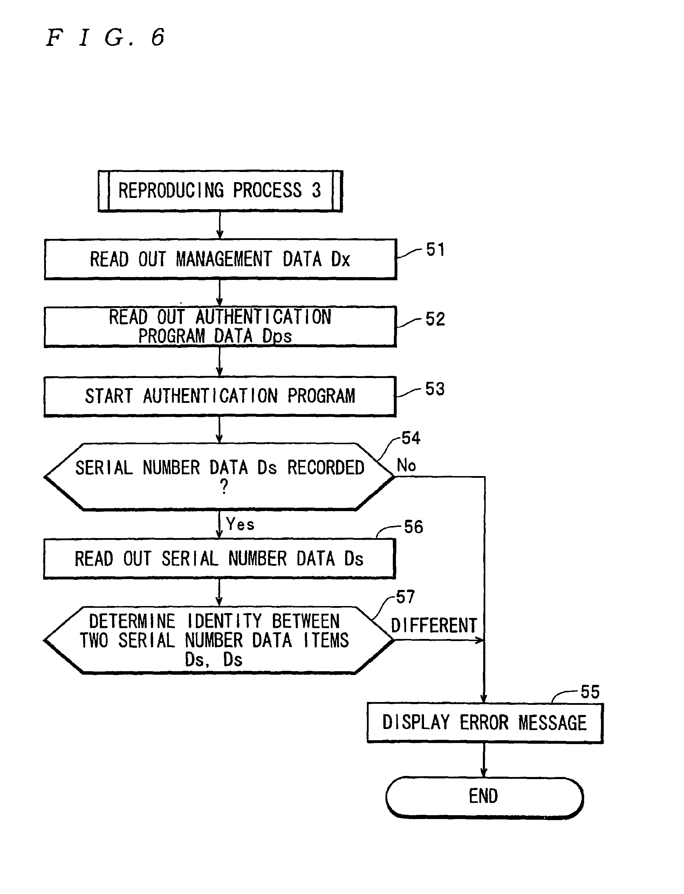

On the other hand, when the data protecting type optical disk OD is inserted into a CD-R drive which is compatible with various disk types, such as a CD-R drive built in the personal computer PC and an external CD-R drive other than the recording/reproducing device 1, and with various data formats, the reproducing process 3 shown in FIG. 6 is executed by the personal computer PC. In the reproducing process 3, the CD-R drive is controlled by the personal computer PC to read out the management data Dx from the management data recording area 11a of the optical disk OD and output the same to the personal computer PC (step 51). In doing this, the personal computer PC reads out the authentication program data Dps according to an instruction described in the management data Dx (step 52). Then, the personal computer PC automatically executes the contents of the authentication program data Dps (i.e. the personal computer PC starts the authentication program) (step 53). When the authentication program data Dps is started, first, the personal computer PC extracts the authentication program data Dp from the authentication program data Dps.

Then, the personal computer PC determines, based on the description of the authentication program data Dp, whether or not there is a serial number data Ds recorded in a built-in memory of the CD-R drive (step 54). In this case, when the CD-R drive is of a connection type (e.g. the SCSI connection type or the IDE connection type) other than the USB connection type, no USB serial number (serial number data Ds) exists. Therefore, after determining that there is no serial number data Ds recorded, the personal computer PC displays on a monitor thereof the error message saying, "Information items for identification do not coincide with each other. Please use the drive used for recording the data on this CD-R, for reproduction of the data." (step 55), followed by terminating the reproducing process 3 by error. As result, unauthorized reproduction of sound (record data Dd) at least by a drive of other connection types than the USB connection type is prevented.

On the other hand, if it is determined in the step 54 that a serial number data Ds is recorded, the personal computer PC reads out the serial number data Ds from the CD-R drive (step 56). At this time, the CD-R drive reads out the serial number data Ds stored in the built-in memory and outputs the same, under control of the personal computer PC. Then, the personal computer PC determines whether or not the serial number data Ds read out is identical to the serial number data Ds recorded in the authentication program data Dps (step 57). In a CD-R drive different from the recording/reproducing device 1 which recorded the record data Dd on the optical disk OD, the two serial number data Ds, Ds are different from each other, and hence it is necessarily determined in the step 57 that the two serial number data Ds, Ds are different from each other. Therefore, the personal computer PC displays on the monitor thereof the error message saying, "Information items for identification do not coincide with each other. Please use the drive used for recording the data on this CD-R, for reproduction of the data." (step 55), followed by terminating the reproducing process 3 by error. As a result, unauthorized reproduction of sound (record data Dd) is prevented.

As described above, according to the recording/ reproducing device 1, in recording record data Dd, the authentication program data Dps comprised of the USB serial number (serial number data Ds) assigned to the reproducing device permitted to reproduce the record data Dd and an authentication program (authentication program data Dp) for causing automatic execution of the predetermined authentication process is recorded, and at the same time, the management data Dx indicating that the authentication program data Dps should be read out first is recorded, whereby access to the recording medium or reading of the record data Dd by a reproducing device (recording/reproducing device) whose serial number data Ds does not coincide can be inhibited through the predetermined authentication process executed according to the authentication program. Further, when a CD player incompatible with other disk types than the CD-DA is used, it is possible to cause disk type error to thereby inhibit reading of the record data Dd. Furthermore, since the authentication program data Dps is recorded on the radially outermost portion of a session, when a CD player compatible with disk types other than the CD-DA is used, it is possible to terminate a reproducing process upon completion of reading of the authentication program data Dps, and hence it is possible to inhibit the CD player from reading the record data Dd. This make it possible to prevent unauthorized reading/writing of record data Dd without any need to execute a complicated authentication process and without encrypting the record data Dd itself, while reducing the manufacturing costs of the optical disk OD. In addition, since it is possible to positively prevent reading of the authentication program data Dps recorded on the optical disk OD, it is also possible to prevent unauthorized rewriting of the authentication program data Dp and serial number data Ds.

Moreover, according to the recording/reproducing device 1, since authentication program data Dps and management data Dx are recorded at the time of recording record data Dd on an optical disk OD, it is possible to dispense with a step of recording a recording medium ID at the time of manufacturing the disk, differently from a partial ROM disk disclosed in Japanese Laid-Open Patent Publication (Kokai) No. 10-49986. As a result, the optical disk OD can be manufactured at low costs. Further, according to the recording/reproducing device 1, since a USB serial number assigned to a recording/reproducing device 1 at the time of manufacturing the same in advance is used as the serial number data Ds, it is possible to dispense with operation for adding a specific ID number to each of numerous recording/reproducing devices 1, 1, ..., and further, dedicated storage means for storing ID numbers for authentication is not used, which contributes to low-cost production of the recording/reproducing device 1.

It should be noted that the present invention is not limited to the above embodiment, but it can be practiced in various forms. For instance, although in the embodiment, a USB serial number is used to form serial number data Ds, this is not limitative, but it is possible to form identification data (ID) of the present invention by an IEEE 1394 standard (FireWire = serial SCSI extended standard) serial number, a management number of a control program for controlling a USB or SCSI interface unit (e.g. the management number of the operating program of the control section 5 of the recording/reproducing device 1), or an identification number specifically assigned to each of a plurality of recording/reproducing devices 1, 1, ... for authentication. Further, although in the above embodiment, authentication program data Dps is recorded at the rear of record data Dd (i.e. a radially outermost portion of a session including the record data Dd), this is not limitative, but it is possible to record authentication program data Dps in the leading portion of the record data recording area 11b on an optical disk OD (i.e. the radially innermost portion of the session) as shown by a broken line in FIG. 2, or between record data Dd, Dd, ... (i.e. at any recording position between the radially innermost portion and radially outermost portion of the session). Further, in the case of recording record data Dd, Dd, ... on an optical disk OD in a multi-session recording method (i.e. a recording method in which the record data area 11b is divided into a predetermined number of sections, and a plurality of management data files Dx, Dx, ... are recorded in the management data recording area 11a), it is possible to indicate the recording positions of respective authentication program data files Dps, respectively, by the management data items Dx associated with the respective sections. In this case, if different reproducing devices are permitted to reproduce the respective sessions, it is possible to record device specification data (serial number data Ds concerning a corresponding reproducing device or authentication program data Dps including the serial number data Ds) enabling identification of a reproducing device corresponding to each of the sessions. Further, although in the above embodiment, a recording method is described, by way of example, in which the authentication program data Dps is generated at the start of the recording process and stored in the RAM 7, timing for generating the authentication program data Dps is not limited to this, but the authentication program data Dps may be generated immediately before being recorded after completion of recording of record data Dd.

Moreover, although in the above embodiment, the recording of digital audio data on an optical disk OD as record data Dd is described by way of example, record data in the invention is not limited to the digital audio data but may include various kinds of digital data, such as image data of moving pictures or still pictures, numerical data, text data, and so forth. Further, record data Dd as digital audio data is not. limited to record data Dd output from a personal computer PC, but it may be digital audio data obtained by converting analog signals input through a microphone to a digital form, or digital audio data output from a device or a system other than a personal computer PC (e.g. digital audio data obtained via a communication terminal unit or generated based on analog audio signals input via an analog signal input interface).

Furthermore, in the embodiment of the invention, an example is described in which serial number data Ds concerning a USB serial number assigned to a recording/reproducing device 1 and serial number data Ds concerning a USB serial number input by operating the operating section 4 are used as identification data (ID), but this is not limitative. For instance, it is also possible to store in the EEPROM 6 serial number data Ds, Ds, ... output from personal computers PC, and use each of the serial number data Ds, Ds, ... as identification data (ID). In this case, by causing a serial number data Ds concerning a drive on a network connected via the computer PC to be stored in advance in the EEPROM 6, it is possible to reproduce record data Dd by using the drive. Further, although in the embodiment, a recording method of recording serial number data Ds in a state coupled to either the head or tail of authentication program data Dp is described by way of example, this is not limitative, but it is also possible to employ a recording method in which a serial number data Ds is recorded as part of authentication program data Dps in a state distributed in authentication program data Dp, or another recording method in which authentication program data Dp and serial number data Ds are separately recorded as respective independent files. According to the recording method of recording serial number data Ds in a state distributed in the authentication program data Dp, the serial number data Ds can be made difficult to analyze.

Although in the above embodiment, description has been given of the recording/reproducing device 1 as an external CD-R drive connectable to the personal computer PC, by way of example, this is not limitative but the recording device of the invention is applicable not only to a recording device as an external device connectable to a personal computer PC or the like, but also to an internal CD-R drive which can be built in a personal computer PC, or a CD recorder capable of producing a music CD-R and reproducing music by itself. Further, the recording medium of the invention is not limited to a CD-R (optical disk OD), but it may be any one of various removable media including various removable memories and disk-type digital data recording media, such as MD's, MO's, FD's, CD-RW's, DVD-R's, DVD-RW's, and so forth. Therefore, the recording device of the invention is not limited to a CD-R drive, but it may be any of various recording devices (recording/reproducing devices), such as a MD drive, a MO drive, a FD drive, a CD-RW drive, a DVD-R drive, a DVD-RW drive, and so forth.

### Industrial Applicability

As described above, according to the record data recording method of the invention, at the time of recording record data, device specification data for specifying a reproducing device permitted to read the record data and a determination program read out by a reproducing device before the record data is read so as to determine identity between this reproducing device and the reproducing device specified based on the device specification data are both recorded on a recording medium together with the record data, whereby a step of recording an ID for authentication or the like on the recording medium in advance can be dispensed with. This makes it possible to reduce the manufacturing costs of the recording medium. Further, for a reproducing device which is not capable of reading the determination program, it is possible to cause a predetermined error to occur, while for a reproducing device which is capable of reading the determination program but incapable of interpreting contents described in the determination program, it is possible to cause a reproducing process to be terminated when the reading of the determination program is completed. Thus, a record data recording method can be realized which is capable of positively protecting the record data against reproducing devices of the above-mentioned kinds. Furthermore, access to the recording medium or reading of the record data by a reproducing device which is capable of interpreting the contents described in the determination program and is other than the reproducing device specified by the device specification data recorded on the recording medium can be positively inhibited based on determination of identity of the device according to the determination program. This realizes a record data recording methodwwhich is simple but capable of positively preventing unauthorized reading and writing of the record data by reproducing devices of the above kinds.

Further, according to the recording medium of the invention, the record data, the device specification data, and the determination program are recorded at the time of recording the record data, by the record data recording method described above, whereby a recording medium is realized which is capable of preventing unauthorized reading/writing of the record data with the manufacturing costs lower than those of a recording medium on which device specification data is recorded at the time of manufacturing thereof in advance.

Furthermore, according to the recording device of the invention, since it comprises a specification data storing section for storing the device specification data, a program storing section for storing the determination program, and a recording control section for causing record data, device specification data, and determination program to be recorded on the recording medium, a recording device is realized which is capable of recording record data such that it is possible to cause a predetermined error to occur for a reproducing device which is not capable of reading the determination program. Further, a recording device is realized which is capable of recording record data such that for a reproducing device which is capable of reading out the determination program but incapable of interpreting contents described in the determination program, it is possible to cause a reproducing process to be terminated when the reading of the determination program is completed. Furthermore, a recording device is realized which is capable of recording record data such that access to the recording medium or reading of the record data by a reproducing device which is capable of interpreting the contents described in the determination program and is other than the reproducing device specified by the device specification data recorded on the recording medium can be positively inhibited based on determination of identity of the device according to the determination program. Moreover, since a step of storing the ID for authentication or the like on the recording medium in advance can be dispensed with, a recording device is realized which is capable of reducing the manufacturing costs of the recording medium.

## Claims

1. A record data recording method for recording record data on a removable recording medium,
wherein in recording the record data on the recording medium, device specification data for specifying a reproducing device permitted to read the record data is recorded, and a determination program is recorded which is read out by a reproducing device before the record data recorded on the recording medium is read out so as to determine identity between the reproducing device which read out the determination program and the reproducing device specified based on the device specification data.

2. A record data recording method according to claim 1, wherein an ID assigned to the reproducing device permitted to read the record data, for identification thereof is recorded as the device specification data.

3. A record data recording method according to claim 1, wherein the device specification data is recorded as part of the determination program.

4. A record data recording method according to claim 2, wherein the device specification data is recorded as part of the determination program.

5. A recording medium on which the record data, the device specification data for specifying the reproducing device permitted to read the record data, and the determination program are recorded by the record data recording method as claimed in any one of claims 1 to 4.

6. A recording device which is capable of recording record data on a removable recording medium,
the recording device comprising a specification data storing section for storing device specification data for specifying a reproducing device permitted to read the record data, a program storing section for storing a determination program which is read out by a reproducing device before the record data recorded on the recording medium is read out so as to determine identity between the reproducing device which read out the determination program and the reproducing device specified based on the recorded device specification data, and a recording control section for causing the device specification data and the determination program to be recorded on the recording medium at a time of recording the record data on the recording medium.

7. A recording device according to claim 6, wherein said specification data storing section stores an ID assigned to the reproducing device permitted to read the record data for identification, as the device specification data.

8. A recording device according to claim 7, wherein said specification data storing section stores, as said ID for identification, any one of a device management number specifically assigned to the reproducing device permitted to read the record data at a time of manufacturing the reproducing device, an interface management number specifically assigned to a data input/output interface section of the reproducing device, and a program management number specifically assigned to a control program for controlling operation of said data input/output interface section.

9. A recording device according to claim 6, comprising a specification data input section for inputting the device specification data from outside the device, and wherein said specification data storing section stores the device specification data input via said specification data input section.

10. A recording device according to claim 7, comprising a specification data input section for inputting the device specification data from outside the device, and wherein said specification data storing section stores the device specification data input via said specification data input section.

11. A recording device according to claim 8, comprising a specification data input section for inputting the device specification data from outside the device, and wherein said specification data storing section stores the device specification data input via said specification data input section.

12. A recording device according to any one of claims 6 to 11, comprising a data reading section for reading out the record data, the determination program, and the device specification data, all of which are recorded on the recording medium, a determination section for determining identity between the reproducing device specified based on the device specification data and the recording device, according to the determination program, and a control section for executing a predetermined process prescribed for each of possible results of determination by said determination section.

13. A recording device according to claim 12, which is capable of executing reproduction based on the record data read out from said recording medium via said data reading section.
